# EUROPEAN PATENT APPLICATION

(11) **EP 4 810 581 A1**
(43) Date of publication of application: **23.09.2026**
(21) Application number: 24891314.7
(22) Date of filing: 07.11.2024
(51) Int. Cl.: C09J 163/00, C09J 11/06, C09J 163/02

(54) **TWO-PACK CURABLE RESIN COMPOSITION AND CURED OBJECT FORMED THEREFROM**

(30) Priority: 14.11.2023 JP 2023193440
(71) Applicant: ThreeBond Co., Ltd., Tokyo 192-0398 (JP)
(72) Inventor: SOGA, Tetsunori, Hachioji-shi, Tokyo 192-0398 (JP)
(74) Representative: Crow, Martin
(86) International application number: PCT/JP2024/039533
(87) International publication number: WO 2025/105276

(57) **Abstract**

An object of the present invention is to provide a two-part curable resin composition in which flexibility can be maintained at low temperatures, the resin is not too flexible at high temperatures, and which allows a cured product excellent in creep resistance to be obtained. A two-part curable resin composition containing the following components (A) to (D): component (A): an epoxy resin, component (B): a metal catalyst, component (C): an organic polymer having a hydrolyzable silyl group, and component (D): a curing agent for an epoxy resin, wherein the component (C) is present in an amount of 27 to 80 parts by mass per 100 parts by mass of the component (A).

## Description

### TECHNICAL FIELD

The present invention relates to a two-part curable resin composition that can maintain flexibility at low temperatures and is excellent in creep resistance at high temperatures.

### BACKGROUND ART

In recent years, there has been an increasing demand for an in-vehicle motor for driving wheels of electric vehicles and hybrid vehicles. In the motor, adhesives are frequently used to fix magnets, and used for, for example, bonding of a stator of the motor and a magnet, and bonding of a rotor and a magnet. JP 8-283687 A discloses that a thermosetting epoxy resin is suitable as an adhesive for a motor due to high adhesion strength. Regarding recent motors, the achievement of downsizing and high output is desired, and in response to this, a neodymium magnet is used as a magnet for a motor. However, the neodymium magnet has characteristics such that it expands at low temperatures and contracts at high temperatures, and when the neodymium magnet is adhered using an epoxy resin, the neodymium magnet may be peeled off at low temperatures or high temperatures caused by a change in an outside air temperature, driving of the motor, or the like, because the flexibility of the resin is insufficient and the resin cannot follow the neodymium magnet, which is problematic.

Thus, to impart flexibility to the epoxy resin, a method of blending a modified silicone resin is known. As such a technique, JP 2019-183090 A discloses a two-part curable resin composition containing an epoxy resin, a metal catalyst, a modified silicone polymer, and an epoxy resin curing agent.

### SUMMARY OF INVENTION

However, while the disclosed two-part curable resin composition has good flexibility at low temperatures due to characteristics of the modified silicone resin, there is a problem in that the resin is too flexible at high temperatures, resulting in deteriorated creep resistance.

The present invention has been made in view of the above circumstances, and an object of the present invention is to provide a two-part curable resin composition that can maintain flexibility at low temperatures and is excellent in creep resistance at high temperatures.

The gist of the present invention will be described as follows. The embodiments of the present invention overcome the above-described conventional problems.
[1] A two-part curable resin composition comprising the following components (A) to (D):
   component (A): an epoxy resin,
   component (B): a metal catalyst,
   component (C): an organic polymer having a hydrolyzable silyl group, and
   component (D): a curing agent for an epoxy resin,
   wherein the component (C) is present in an amount of 27 to 80 parts by mass per 100 parts by mass of the component (A).
[2] The two-part curable resin composition according to [1], wherein the two-part curable resin composition is composed of an agent A and an agent B, wherein the agent A is a composition containing the component (A) and the component (B), and the agent B is a composition containing the component (C) and the component (D).
[3] The two-part curable resin composition according to [1] or [2], wherein the component (A) contains a bisphenol type epoxy resin (a1) and/or a hydrogenated bisphenol type epoxy resin (a2).
[4] The two-part curable resin composition according to any of [1] to [3], wherein the component (B) is a chelated titanium catalyst.
[5] The two-part curable resin composition according to any of [1] to [4], wherein the component (C) contains a dimethoxysilyl-containing organic polymer (c1) and/or a trimethoxysilyl-containing organic polymer (c2).
[6] The two-part curable resin composition according to any of [1] to [5], wherein the two-part curable resin composition is used for bonding of a motor magnet.
[7] A cured product obtained by curing the two-part curable resin composition according to any of [1] to [6].
[8] A motor using the two-part curable resin composition according to any of [1] to [7].

### DESCRIPTION OF EMBODIMENTS

Hereinafter, the present invention will be described in detail. As used herein, "X to Y" is used as a meaning including numerical values described before and after "to" (X and Y) as the lower limit value and the upper limit value, and means "X or more and Y or less". As used herein, the term "(meth)acryl" means acryl and/or methacryl.

The present invention is a two-part curable resin composition containing the following components (A) to (D):
component (A): an epoxy resin,
component (B): a metal catalyst,
component (C): an organic polymer having a hydrolyzable silyl group, and
component (D): a curing agent for an epoxy resin,
wherein the component (C) is present in an amount of 27 to 80 parts by mass per 100 parts by mass of the component (A).

The two-part curable resin composition of the present invention having such a configuration can maintain flexibility at low temperatures and is excellent in creep resistance at high temperatures.

### [Component (A)]

The component (A) of the present invention is an epoxy resin. The component (A) may be solid or liquid, as long as it is a compound having one or more epoxy groups. The component (A) preferably contains an epoxy resin having two or more epoxy groups without particular limitation, since curing properties at ambient temperature and creep resistance at high temperatures are excellent. The number of epoxy groups in the epoxy resin is preferably 6 or less, 4 or less, or 3 or less. The epoxy resin is preferably liquid at 25°C in terms of the workability of the two-part curable resin composition. Specific examples of the component (A) include alkylene glycol type epoxy resins such as a bisphenol type epoxy resin, a hydrogenated epoxy resin obtained by hydrogenating an epoxy resin having an aromatic ring, 1,2-butanediol diglycidyl ether, 1,3-butanediol diglycidyl ether, 1,4-butanediol diglycidyl ether, (poly)ethylene glycol diglycidyl ether, propylene glycol diglycidyl ether, 2,3-butanediol diglycidyl ether, 1,5-pentanediol diglycidyl ether, 1,6-hexanediol diglycidyl ether, neopentyl glycol diglycidyl ether, and 1,4-cyclohexanedimethanol diglycidyl ether; novolac type epoxy resins such as a phenol novolac type epoxy resin and a cresol novolac type epoxy resin; glycidyl amine compounds such as N,N-diglycidyl-4-glycidyloxyaniline, 4,4'-methylenebis(N,N-diglycidylaniline), tetraglycidyl diaminodiphenylmethane, and tetraglycidyl-m-xylylenediamine; and a naphthalene type epoxy resin having four glycidyl groups. These may be used singly, or in combinations of two or more thereof, and since creep resistance at high temperatures is excellent, the component (A) preferably contains a bisphenol type epoxy resin (a1) and/or a hydrogenated epoxy resin (a2), more preferably contains a bisphenol type epoxy resin (a1) and a hydrogenated epoxy resin (a2), and most preferably contains only a bisphenol type epoxy resin (a1) and a hydrogenated epoxy resin (a2). The silane coupling agent described below is not handled as the component (A), but is handled as an optional component.

The bisphenol type epoxy resin is not particularly limited, as long as it is an epoxy resin having a bisphenol skeleton, and examples thereof include a bisphenol A type epoxy resin, a bisphenol F type epoxy resin, bisphenol S, a bisphenol AD type epoxy resin, a urethane-modified bisphenol type epoxy resin, a rubber-modified bisphenol type epoxy resin, and a polyoxyalkylene-modified bisphenol type epoxy resin. These may be used singly, or in combinations of two or more thereof, and since creep resistance at high temperatures is excellent, the bisphenol A type epoxy resin and/or the bisphenol F type epoxy resin are/is preferable.

Examples of the commercial product of the bisphenol type epoxy resin include, but are not particularly limited to, jER828, 834, 1000, 1001, 806, and 807 (manufactured by Mitsubishi Chemical Corporation), EPICLON 830, 850, 830LVP, 850CRP, 835LV, 860, and 1050 (manufactured by DIC CORPORATION), ADEKA RESIN EP4100, EP4400, EP4901, EP4000, and EP4000S (manufactured by ADEKA Corporation), DER-331, 332, and 334 (manufactured by Dow Chemical Japan Ltd.), and YD-115, YD-127, YDF-170, and YDF-2001 (manufactured by NIPPON STEEL Chemical & Material Co., Ltd.). These may be used singly, or in combinations of two or more thereof.

Examples of the hydrogenated epoxy resin include, but are not particularly limited to, hydrogenated bisphenol type epoxy resins such as a hydrogenated bisphenol A type epoxy resin, a hydrogenated bisphenol F type epoxy resin, and a hydrogenated bisphenol E type epoxy resin; hydrogenated cresol novolac type epoxy resins; and hydrogenated phenol novolac type epoxy resins, and among them, since it is excellent in creep resistance at high temperatures, the hydrogenated bisphenol type epoxy resin is preferable. These may be used singly, or as a mixture of two or more thereof.

Examples of the commercial product of the hydrogenated epoxy resin include, but are not limited to, YX8000 and YX8034 (manufactured by Mitsubishi Chemical Corporation), RIKARESIN HBE-100 (manufactured by New Japan Chemical Co., Ltd.), EP-4080E (manufactured by ADEKA Corporation), ST-3000 (manufactured by NIPPON STEEL Chemical & Material Co., Ltd.), and DENACOL EX-252 (manufactured by Nagase ChemteX Corporation). These may be used singly, or as a mixture of two or more thereof.

The bisphenol type epoxy resin and the hydrogenated epoxy resin are preferably used in combination. The mass ratio of the bisphenol type epoxy resin to the hydrogenated epoxy resin is not particularly limited, and is, for example, in a range of 20:80 to 80:20, preferably in a range of 30:70 to 70:30, and still more preferably in a range of 40:60 to 60:40. Within the above range, a cured product being further excellent in creep resistance at high temperatures can be obtained.

### [Component (B)]

The component (B) used in the present invention is a metal catalyst. The component (B) is not particularly limited, as long as it cures the component (C) described below. Specific examples of the component (B) include tin catalysts such as dibutyltin dilaurate, dibutyltin oxide, dibutyltin diacetate, dibutyltin distearate, dibutyltin laurate oxide, dibutyltin diacetylacetonate, dibutyltin dioleylmaleate, dibutyltin octoate, dioctyltin oxide, dioctyltin dilaurate, and a reactant of a dioctyltin salt and a silicate; titanium catalysts such as titanium tetraisopropoxide, titanium diisopropoxy bis(acetylacetonate), titanium diisopropoxy bis(ethylacetoacetate), tetratertiarybutyl titanate, and titanium tetranormal butoxide; bismuth catalysts such as bismuth carboxylate, bismuth neodecanoate, bismuth dicarboxylate, bismuth benzoate, bismuth abietate, bismuth neoabietate, and bismuth octylate; aluminum catalysts; zirconium catalysts; and zinc catalysts. Among these, the titanium catalyst, bismuth catalyst, aluminum catalyst, zirconium catalyst, or zinc catalyst other than the tin catalyst is preferable from consideration of the environment, the titanium catalyst is most preferable because a cured product excellent in curing properties and flexibility at low temperatures can be obtained, and a chelated titanium catalyst such as titanium diisopropoxy bis(acetylacetonate) or titanium diisopropoxy bis(ethylacetoacetate) is more preferable. These may be used singly, or in combinations of two or more thereof.

The commercial product of the component (B) is not particularly limited. Examples of the tin catalyst include NEOSTANN U-100, U-130, U-200, and U-303(manufactured by NITTOH CHEMICAL Co., Ltd.); examples of the titanium catalyst include TA-8, TA-10, TA-21, TA-23, TA-30, TA-80, TC-100, TC-120, and TC-401 (manufactured by Matsumoto Fine Chemical Co., Ltd.); examples of the bismuth catalyst include K-KAT348, XK-628, and XK-640 (manufactured by King Industries Inc.), PUCAT B7, 25, and bismuth neodecanoate (manufactured by NIHON KAGAKU SANGYO CO.,LTD.), and Borchi Kat315, Kat320, and Kat24 (manufactured by Borchers); examples of the zirconium catalyst include ZA-45 (manufactured by Matsumoto Fine Chemical Co., Ltd.); examples of the aluminum catalyst include DX-9740 (Shin-Etsu Chemical Co., Ltd.), and AMD, ASBD, AIPD, ALCH, ALCH-TR, aluminum chelate M, aluminum chelate D, and aluminum chelate A (manufactured by Kawaken Fine Chemicals Co.,Ltd.); and examples of the zinc catalyst include K-KAT670 (manufactured by King Industries Inc.).

The amount of the component (B) added is 0.1 to 50 parts by mass, still more preferably 0.5 to 30 parts by mass, particularly preferably 1 to 15 parts by mass, most preferably 3 to 15 parts by mass, and also preferably in a range of 5 to 10 parts by mass per 100 parts by mass of the component (C) described below. When the amount added is 0.1 parts by mass or more, a cured product excellent in curing properties at room temperature can be obtained, and when it is 50 parts by mass or less, a cured product excellent in flexibility at low temperatures can be obtained. When two or more components (B) are used, the above content means the total amount thereof.

### [Component (C)]

The component (C) used in the present invention is a hydrolyzable silyl group-containing organic polymer. The component (C) is not particularly limited, as long as it is an organic polymer having a hydrolyzable silyl group in the molecule, and since both flexibility at low temperatures and creep resistance at high temperatures can be achieved, the component (C) preferably has two or more hydrolyzable silyl groups, and is preferably an organic polymer having a hydrolyzable silyl group at a terminal. Examples of the hydrolyzable silyl group include alkoxysilyl groups such as a dimethoxysilyl group, a trimethoxysilyl group, a diethoxysilyl group, and a triethoxysilyl group, and since curing properties are excellent, a dimethoxysilyl group and/or a trimethoxysilyl group are/is preferable. These may be used singly, or in combinations of two or more thereof, and the component (C) preferably contains an organic polymer having a dimethoxysilyl group (c1) and/or an organic polymer having a trimethoxysilyl group (c2) since curing properties are excellent, and more preferably contains an organic polymer having a dimethoxysilyl group (c1) and an organic polymer having a trimethoxysilyl group (c2) in terms of the improvement of creep resistance at high temperatures. From the viewpoint of handleability, the component (C) is preferably liquid at 25°C. The silane coupling agent and storage stabilizing agent described below are not handled as the component (C), and handled as optional components. When (c1) and (c2) are used in combination, the mass ratio of (c1) to (c2) is preferably 30:70 to 70:30, and also preferably 40:60 to 60:40.

The structure of the organic polymer of the above component (C) is not particularly limited, and examples thereof include structures of polyoxyalkylene, polyester, polycarbonate, polyurethane, polyamide, polyurea, polyimide, polyethylene, polypropylene, polyisobutylene, a (meth)acrylic polymer, polystyrene, polyvinyl chloride, polybutadiene, polyisoprene, polyvinyl butyral, polyvinyl ether, and the like. Since both flexibility at low temperatures and creep resistance at high temperatures can be achieved, the organic polymer of the component (C) preferably contains a polyoxyalkylene structure. That is, the component (C) preferably contains a hydrolyzable silyl group-containing polyoxyalkylene polymer. These may be used singly, or in combinations of two or more thereof.

Examples of the commercial product of the hydrolyzable silyl group-containing polyoxyalkylene polymer of the component (C) include SAT010, SAX115, SAT030,SAT030, SAT200,SAT350, SAT400,SAX220, SAX510, SAX530, SAX575, SAX580, SAX710, SAX720,SAX725, SAX750, SAX770, S203, S303,S203H, S303H, S943S, S911S, MA440, MA447, MA451, MA903, MA903M, MA904, S943, MAX923, MAX951, SAX510, SAX520, SAX530, and SAX580 (manufactured by KANEKA CORPORATION), and ES-S2410, ES-S2420, ES-S3430, ES-S3610, and ES-S3630 (manufactured by Asahi Glass Co., Ltd.).

The amount of the component (C) added is 27 to 80 parts by mass, and more preferably 30 to 75 parts by mass per 100 parts by mass of the component (A). When the amount added is 27 parts by mass or more, a cured product excellent in flexibility at low temperatures can be obtained, and when it is 80 parts by mass or less, a cured product excellent in creep resistance at high temperatures can be obtained. When two or more components (C) are used, the above content means the total amount thereof.

### [Component (D)]

The component (D) of the present invention is a curing agent for an epoxy resin, and is not particularly limited, as long as it can cure the component (A). Examples of the component (D) include an amine compound, a polymercaptan compound, and an acid anhydride compound, and since curing properties at room temperature are excellent, an amine compound is preferable. The component (D) is preferably liquid at 25°C, from the viewpoint of the curing properties and workability after mixing. These may be used singly, or as a mixture of two or more thereof. The silane coupling agent described below is not handled as the component (D), but is handled as an optional component.

Examples of the amine compound include a primary amine, a secondary amine, a tertiary amine, an amine adduct compound, a polyamide compound, and an imidazole compound. From the viewpoint of excellent curing properties at room temperature and creep resistance at high temperatures, a primary amine, a secondary amine, or a tertiary amine is preferable, a secondary amine or a tertiary amine is still more preferable, and a tertiary amine is most preferable. These may be used singly, or as a mixture of two or more thereof.

Examples of the primary amine include an aliphatic primary amine, a cycloaliphatic primary amine, and an aromatic primary amine. Examples of the aliphatic primary amine include, but are not particularly limited to, ethylenediamine, diethylenetriamine, triethylenetetramine, and hexamethylenediamine. Examples of the cycloaliphatic primary amine include menthanediamine, isophoronediamine, N-aminoethylpiperazine, diaminodicyclohexylmethane, and norbornanediamine. Examples of the aromatic primary amine include dimethylaminomethylphenol, metaxylylenediamine, metaphenylenediamine, diaminodiphenylmethane, diaminodiphenylsulfone, and diaminodiethyldiphenylmethane.

Examples of the secondary amine or tertiary amine include, but are not particularly limited to, piperidine, pyridine, benzyldimethylamine, 2-(dimethylaminomethyl)phenol, triethylenediamine, dimethylcyclohexylamine, dimethylbenzylamine, dimethylhexylamine, dimethylaminophenol, dimethylamino p-cresol, piperidine, 1,4-diazabicyclo[2.2.2]octane, 2,4,6-tris(dimethylaminomethyl)phenol, and 1,8-diazabicyclo[5.4.0]undecene-1. As the secondary amine or the tertiary amine, a compound having an aromatic ring is preferable, and 2,4,6-tris(dimethylaminomethyl)phenol is still more preferable, from the viewpoint of excellent curing properties at room temperature and creep resistance at high temperatures. Examples of the commercial product include K-54 (AIR PRODUCTS JAPAN K.K.).

Examples of the imidazole compound include, but are not particularly limited to, 2-methylimidazole, 1,2-dimethylimidazole, 2-phenylimidazole, 2-undecylimidazole, 2-heptadecylimidazole, 1-isobutyl-2-methylimidazole, 2-phenyl-4-methylimidazole, 2-ethyl-4-methylimidazole, 1-benzyl-2-phenylimidazole, 1-benzyl-2-methylimidazole, 1-cyanoethyl-2-methylimidazole, 1-cyanoethyl-2-phenylimidazole, 1-cyanoethyl-2-undecyl imidazole, 2,4-diamino-6(2'-methylimidazole(1'))ethyl-s-triazine, 2,4-diamino-6(2'-undecylimidazole(1'))ethyl-s-triazine, 2,4-diamino-6(2'-ethyl,4-methylimidazole(1'))ethyl-s-triazine, 2-phenyl-3,5-dihydroxymethylimidazole, 2-phenyl-4-hydroxymethyl-5-methylimidazole, and 1-cyanoethyl-2-phenyl-3,5-dicyanoethoxymethylimidazole.

Examples of the amine adduct compound include one obtained by adding a tertiary amine or an imidazole compound to an epoxy resin and stopping the reaction in the middle. Fine powder or the like obtained by pulverizing the epoxy adduct compound is most preferably used in consideration of storage stability and curing properties. Examples of the commercially available epoxy adduct compound include AJICURE series manufactured by Ajinomoto Fine-Techno Co., Inc., Fujicure series manufactured by T&K TOKA Corporation, and NOVACURE series manufactured by Asahi Kasei Chemicals Corporation.

Examples of the polymercaptan compound include, but are not particularly limited to, alkylpolythiols such as 3,3'-dithiodipropionic acid, trimethylolpropanetris(thioglycolate), pentaerythritoltetrakis(thioglycolate), ethylene glycol dithioglycolate, 1,4-bis(3-mercaptobutyryloxy)butane, tris[(3-mercaptopropionyloxy)-ethyl]-isocyanurate (TEMPIC), 1,3,5-tris(3-mercaptobutyloxyethyl)-1,3,5-triazine-2,4,6(1H,3H,5H)-trione, trimethylolpropane tris(3-mercaptopropionate) (TMMP), pentaerythritol tetrakis(3-mercaptopropionate) (PEMP), pentaerythritol tetrakis(3-mercaptobutyrate), dipentaerythritol hexakis(3-mercaptopropionate) (DPMP), 1,4-butanedithiol, 1,6-hexanedithiol, and 1,10-decanedithiol; and terminal thiol group-containing polythioethers.

Examples of the acid anhydride compound include, but are not particularly limited to, tetrahydrophthalic anhydride, methyl tetrahydrophthalic anhydride, hexahydrophthalic anhydride, methyl hexahydrophthalic anhydride, methyl endoethylenetetrahydrophthalic anhydride, trialkyltetrahydrophthalic anhydride, methyl nadic anhydride, phthalic anhydride, trimellitic anhydride, pyromellitic anhydride, and maleic anhydride.

The amount of the component (D) added is 0.1 to 50 parts by mass, still more preferably 1 to 20 parts by mass, still more preferably 1 to 10 parts by mass, and most preferably 1 to 5 parts by mass per 100 parts by mass of the component (A). When the amount added is 0.1 parts by mass or more, a cured product excellent in curing properties at room temperature can be obtained, and when it is 50 parts by mass or less, a cured product excellent in flexibility at low temperatures can be obtained. When two or more components (D) are used, the above content means the total amount thereof.

Additives such as a curing accelerator, a filler, various elastomers such as a styrene copolymer, a reactive diluent, a silane coupling agent, a storage stabilizing agent, an antioxidant, a light stabilizer, a heavy metal deactivator, a plasticizer, a defoaming agent, a pigment, a dye, a solvent, an anticorrosive, a leveling agent, a dispersant, a rheology modifier, a fire retardant, and a surfactant may be used in the present invention as optional components, within a range of not impairing the object of the present invention.

In the present invention, a filler may be added to improve flexibility at low temperatures and creep resistance at high temperatures. Specific examples thereof include organic powder, inorganic powder, and metal powder. Examples of the inorganic powder filler include glass, talc, fumed silica, mica, ceramic, silicone rubber powder, calcium carbonate, carbon powder, kaolin clay, dry clay mineral, and dry diatomaceous earth. Examples of the organic powder filler include polyethylene, polypropylene, nylon, cross-linked acryl, cross-linked polystyrene, polyester, polyvinyl alcohol, polyvinyl butyral, and polycarbonate. Examples of the metal powder filler include gold, silver, copper, alumina, aluminum nitride, and aluminum hydroxide. The amount of the filler added is not particularly limited, and is preferably 0.1 to 90% by mass, still more preferably 0.5 to 85% by mass, and most preferably 1 to 80% by mass based on the whole two-part curable resin composition. When the amount added is 0.1% by mass or more, a cured product excellent in creep resistance at high temperatures can be obtained, and when it is 90% by mass or less, a cured product excellent in flexibility at low temperatures can be obtained.

The fumed silica is blended to adjust the viscosity of the two-part curable resin composition and improve the resin strength of the cured product. For example, fumed silica subjected to surface treatment with dimethylsilane, trimethylsilane, alkylsilane, methacryloxysilane, organochlorosilane, polydimethylsiloxane, hexamethyldisilazane, or the like is preferably used. Examples of the commercial product of fumed silica include AerosilR972, R972V, R972CF, R974, R976, R976S, R9200, RX50, NAX50, NX90, RX200, RX300, R812, R812S, R8200, RY50, NY50, RY200S, RY200, RY300, R104, R106, R202, R805, R816, T805, R711, RM50, and R7200 (manufactured by NIPPON AEROSIL CO., LTD.), and TS720 (Cabot Corporation).

Examples of the storage stabilizing agent include tetrafunctional alkoxysilane such as tetramethoxysilane and tetraethoxysilane; and silicate compounds exemplified by methyltrimethoxysilane, methyltriethoxysilane, ethyl silicate, propyl silicate, and butyl silicate. These may be used singly, or in combinations of two or more thereof. The storage stabilizing agent is not handled as the above component (C) and the silane coupling agent described below.

Examples of the silane coupling agent that can be used in the present invention include glycidyl group-containing silane coupling agents such as 3-glycidoxypropyltriethoxysilane, 3-glycidoxypropylmethyldimethoxysilane, 3-glycidoxypropyltrimethoxysilane, and 3-glycidoxypropylmethyldiethoxysilane; vinyl group-containing silane coupling agents such as vinyl tris(β-methoxyethoxy)silane, vinyl triethoxysilane, and vinyl trimethoxysilane; (meth)acrylic group-containing silane coupling agents such as 3-methacryloxypropyltriethoxysilane, 3-methacryloxypropyltrimethoxysilane, 3-methacryloxypropylmethyldiethoxysilane, 3-methacryloxypropylmethyldimethoxysilane, and 3-acryloxypropyltrimethoxysilane; amino group-containing silane coupling agents such as 3-aminopropyltrimethoxysilane, 3-aminopropyltriethoxysilane, 3-(2-aminoethyl)aminopropyltrimethoxysilane, and N-2-(aminoethyl)-3-aminopropylmethyldimethoxysilane; γ-mercaptopropyltrimethoxysilane, γ-chloropropyltrimethoxysilane, and oligomers thereof, and since creep resistance at high temperatures is excellent, a glycidyl group-containing silane coupling agent and an amino group-containing silane coupling agent are preferable, a glycidyl group-containing silane coupling agent and an amino group-containing silane coupling agent are still more preferably used in combination, and 3-glycidoxypropyltrimethoxysilane and 3-(2-aminoethyl)aminopropyltrimethoxysilane are most preferably used in combination. These may be used singly, or in combinations of two or more thereof, and since creep resistance at high temperatures can be further improved, a glycidyl group-containing silane coupling agent and an amino group-containing silane coupling agent is more preferably used in combination. As the two-part curable resin composition, the glycidyl group-containing silane coupling agent is preferably contained in a liquid other than the component (D), and the amino group-containing silane coupling agent is preferably contained in a liquid other than the component (A), from the viewpoint of excellent preservability. The silane coupling agent is not handled as the components (A) to (D). In addition, the silane compound contained in the storage stabilizing agent is not handled as the silane coupling agent.

Examples of the commercial product of the silane coupling agent include, but are not particularly limited to, KBM-1003, KBE-1003, KBM-303, KBM-403, KBE-403, KBM-502, KBE-502, KBM-503, KBE-503, KBM-5103, KBM-1403, KBM-602, KBM-603, KBM-903, and KBE-903 (manufactured by Shin-Etsu Chemical Co., Ltd.), Z-6610, Z-6044, Z-6825, Z-6033, Z-6062, and Z-6094 (manufactured by Dow Corning Toray Co., Ltd.).

The content of the silane coupling agent is preferably 0.1 to 20 parts by mass, still more preferably 0.5 to 10 parts by mass, and most preferably 0.5 to 5 parts by mass based on a total amount of the component (A) and the component (C) of 100 parts by mass. When the content is 0.1 parts by mass or more, a cured product excellent in creep resistance at high temperatures can be obtained, and when it is 20 parts by mass or less, a cured product excellent in flexibility at low temperatures can be obtained. When two or more silane coupling agent are used, the above content means the total amount thereof.

Examples of the plasticizer that can be used in the present invention include, but are not limited to, polycarboxylic acid ester-based plasticizers such as aromatic polycarboxylic acid ester, phthalic acid ester-based plasticizers such as dioctyl phthalate (DOP), dibutyl phthalate (DBP), diheptyl phthalate (DHP), diisononyl phthalate (DINP), diisodecyl phthalate (DIDP), and butylbenzyl phthalate (BBP); trimellitic acid ester-based plasticizers such as trioctyl trimellitate (TOTM) and triisodecyl trimellitate (TITM); pyromellitic acid ester-based plasticizers such as tetraoctyl pyromellitate; aliphatic polycarboxylic acid ester-based plasticizers such as di2-ethylhexyl adipate (DOA), isodecyl adipate (DIDA), di2-ethylhexyl sebacate (DOS), dibutyl sebacate (DBS), di2-ethylhexyl maleate (DOM), dibutyl fumarate (DBF), di2-ethylhexyl azelate (DOZ), di2-ethylhexyl epoxyhexahydrophthalate, trioctyl citrate, and glycerol triacetate; phosphoric acid ester-based plasticizers such as trimethyl phosphate, tributyl phosphate, tri-(2-ethylhexyl) phosphate, tributoxyethyl phosphate, triphenyl phosphate, tricresyl phosphate, alkylaryl phosphate, triethyl phosphate, tri(chloroethyl) phosphate, trisdichloropropyl phosphate, tris(β-chloropropyl) phosphate, octyl diphenyl phosphate, tris(isopropylphenyl) phosphate, and cresyl phenyl phosphate. These may be used singly, or in combinations of two or more thereof.

The two-part curable resin composition of the present invention is preferably composed of the agent A and the agent B, and the agent A is a composition containing the component (A) and the component (B), and the agent B is a composition containing the component (C) and the component (D). Thus, by dividing the components in different liquids, the useless reaction during storage can be suppressed, and the storage stability can be enhanced. Optional components such as the silane coupling agent and the filler may be contained in either the agent A or the agent B, and since the adhesive force to a base is improved and creep resistance is excellent, the silane coupling agent is preferably contained in the agent A and the agent B in a mass ratio of 10:90 to 90:10, still more preferably 20:80 to 80:20, and most preferably 20:80 to 60:40. The amount of the filler contained in the agent A may be smaller than the amount of the filler contained in the agent B, or may be the same as the amount of the filler contained in the agent B. The filler is preferably contained in the agent A and the agent B in a mass ratio of 5:95 to 95:5, still more preferably 10:90 to 90:10, and most preferably 20:80 to 80:20. The two-part curable resin composition is used by mixing two liquid in use. The mixing ratio of the agent A to the agent B is in a range of 95:5 to 5:95, more preferably 90:10 to 10:90, particularly preferably in a range of 80:20 to 20:80, and most preferably 80:20 to 50:50 in a mass ratio. Within the above range, a cured product excellent in creep resistance at high temperatures and flexibility at low temperatures can be obtained.

A cured product obtained by curing the two-part curable resin composition of the present invention is one aspect of the invention. As the curing method, two liquids are mixed together at a predetermined ratio, and then allowing the mixture to stand still at 25°C for preferably 12 to 240 hours, more preferably 72 to 240 hours, and most preferably 120 to 192 hours. The curing of the two-part curable resin composition may be accelerated by heat curing. In the case of heat curing, the curing temperature is preferably 50 to 150°C, still more preferably 60 to 120°C, and most preferably 70 to 100°C. The relative humidity is preferably 40%RH or more, and the curing time is preferably 0.5 to 10 hours, more preferably 1 to 8 hours, and most preferably 3 to 6 hours.

The two-part curable resin composition of the present invention can be used for various applications such as adhesive, encapsulant, sealant, potting agent, coating agent, lining material, heat dissipation material, conductive paste, and structure bonding applications, and among them, since both creep resistance at high temperatures and flexibility at low temperatures can be achieved, applications for adhering motor magnets are preferable. In addition, a motor adhered by the two-part curable resin composition of the present invention is also one aspect of the present invention.

The two-part curable resin composition of the present invention is suitable for an adhesive. Examples of bonded objects include, but are not particularly limited to, metal to metal, metal to magnet, metal to plastic, metal to rubber, metal to glass, plastic to rubber, plastic to glass, plastic to plastic, rubber to rubber, rubber to glass, and glass to glass, and among them, metal to metal, metal to magnet, and metal to plastic are preferable. Since the two-part curable resin composition is excellent in the bonding of a motor magnet, applications for metal to magnet bonding is preferable.

Examples of the metal include, but are not particularly limited to, gold, silver, iron, aluminum, magnesium, copper, steel, stainless, and titanium. Examples of the magnet include a ferrite magnet, an alloy magnet, and a neodymium magnet, and since both creep resistance at high temperatures and flexibility at low temperatures can be achieved, two-part curable resin composition of the present invention is suitable for bonding of a neodymium magnet. Examples of the plastic include, but are not particularly limited to, fiber reinforced plastic (FRP), carbon fiber reinforced plastic (CFRP), polyacryl, polyester, polyamide, acrylonitrile-butadienestyrene, nylon 6, polycarbonate, polyacetal, polyethylene terephthalate, polybutylene terephthalate, polyphenylene sulfide, polyphenylene ether, polyether ether ketone, polyethylene, and polypropylene. Examples of the rubber include, but are not particularly limited to, nitrile rubber, butyl rubber, urethane rubber, silicone rubber, and EPDM. Examples of the bonding include bonding of two or more bonding objects at least selected from them. In addition, the surface of the material may be subjected to surface treatment in advance, or may be untreated.

### Examples

Hereinafter, the present invention will be described in further detail with reference to examples, but the present invention is not limited to these examples.

### <Preparation of two-part curable resin composition>

The test methods used in the following Examples and Comparative Examples are as follows. Respective components were collected in parts by mass shown in Table 1, mixed at ambient temperature for 60 minutes with a mixer, whereby an agent A and an agent B corresponding to a two-part curable resin composition were prepared. The specific amount of preparation was according to Table 1, and all numerical values are expressed by parts by mass.
Component (A): epoxy resin
   (a1): bisphenol A type epoxy resin (epoxy group: difunctional, liquid at 25°C, jER828 manufactured by Mitsubishi Chemical Corporation)
   (a2):hydrogenated a bisphenol A type epoxy resin (epoxy group: difunctional, liquid at 25°C, RIKARESIN HBE-100 manufactured by New Japan Chemical Co.,Ltd.)
Component (B): metal catalyst
   Titanium diisopropoxybis(acetylacetonate) (TC-100 manufactured by Matsumoto Fine Chemical Co., Ltd.)
Component (C): organic polymer having a hydrolyzable silyl group
   (c1) Polyoxyalkylene containing a dimethoxysilyl group at both terminals (liquid at 25°C, SAX-750 manufactured by KANEKA CORPORATION)
   (c2) Polyoxyalkylene containing a trimethoxysilyl group at both terminals (liquid at 25°C, SAX-575 manufactured by KANEKA CORPORATION)
Component (D): curing agent for an epoxy resin
   2,4,6-tris(Dimethylaminomethyl)phenol (Ancamine K-54 manufactured by Air Products Japan, Inc.)
Optional component
   3-Glycidoxypropyltrimethoxysilane (KBM-403 manufactured by Shin-Etsu Chemical Co., Ltd.)
   3-(2-Aminoethyl)aminopropyltrimethoxysilane (Z-6094 manufactured by Dow Toray Co., Ltd.)

### <Dynamic viscoelasticity measurement (DMA) (after curing)>

The agent A and the agent B of each two-part curable resin composition were mixed in a ratio equivalent to the total amount described in Table 1 in an environment of 25°C × 50%RH for 10 minutes with a rod made of wood. The mixed composition was formed into a sheet form of 60 mm in length × 10 mm in width × 1.0 mm in thickness, and this was allowed to stand still at 25°C for 168 hours to produce a cured product. The produced cured product was mounted to a jig of a tension mode of a dynamic viscoelasticity measurement apparatus DMS6100 manufactured by Hitachi High-Technologies Corporation, and measured at a frequency of 1 Hz in a temperature range of -50 to 200°C. The "storage modulus (Pa)" was confirmed at a frequency of 1 Hz and - 40°C and 160°C. Since flexibility at low temperatures is excellent, the "storage modulus (-40°C)" is preferably 1.0 × 10⁹ Pa or less. Since creep resistance at high temperatures is excellent, the "storage modulus (160°C)" is preferably 2.5 × 10⁷ Pa or more, and still more preferably 4.0 to 6.0 × 10⁷ Pa.

### <Preparation of test piece>

The agent A and the agent B of each two-part curable resin composition were mixed in a ratio equivalent to the total amount described in Table 1 in an environment of 25°C × 50%RH for 10 minutes with a rod made of wood. Then, the composition after mixing was applied to an SPCC-SD of 100 mm in length × 25 mm in width × 1.6 mm in thickness so that the bonding area was 1 mm in length × 3.5 mm in width and the thickness of the resin was 0.08 mm, and another SPCC-SD was laminated and fixed. Then, the laminated SPCC-SD after being left in an environment of 25°C for 168 hours was used as the test piece.

### <Creep test>

A weight of 750 g was mounted on the end part at one side of the test piece. Thereafter, the test piece was put into a hot air drying furnace set at 160°C in a suspended state with the end part on the other side directing upward. After 800 hours, the test piece was taken out from the hot air drying furnace, and visually confirmed whether the bonding portion was peeled off and the test piece was dropped or not. Thereafter, the creep resistance was determined according to evaluation criteria.

### Evaluation criteria

Good: test piece was not dropped
Poor: test piece was dropped

**[Table 1]**

| | | Component | Example 1 | Example 2 | Example 3 | Example 4 | Example 5 | Example 6 |
|---|---|---|---|---|---|---|---|---|
| Agent A | Component (A) | (a1)jER828 | 50 | 50 | 50 | 50 | 100 | 50 |
| | | (a2) RIKARESIN HBE-100 | 50 | 50 | 50 | 50 | - | 50 |
| | Component (B) | TC-100 | 4 | 4 | 4 | 4 | 4 | 4 |
| | Optional component | KBM-403 | 1 | 1 | 1 | 1 | 1 | 1 |
| | Total amount | | 105 | 105 | 105 | 105 | 105 | 105 |
| Agent B | Component (C) | (c1)SAX750 | 35 | 30 | 25 | 15 | 25 | - |
| | | (c2)SAX575 | 35 | 30 | 25 | 15 | 25 | 50 |
| | Component (D) | Ancamine K-54 | 3 | 2.5 | 2 | 1.3 | 2 | 2 |
| | Optional component | Z-6094 | 2.3 | 2 | 1.5 | 1 | 1.5 | 1.5 |
| | Total amount | | 75.3 | 64.5 | 53.5 | 32.3 | 53.5 | 53.5 |
| Storage modulus (-40°C)[Pa] | | | 8.0×10⁸ | 8.0×10⁸ | 8.1×10⁸ | 8.4×10⁸ | 8.2×10⁸ | 8.8×10⁸ |
| Storage modulus (160°C)[Pa] | | | 3.8×10⁷ | 4.7×10⁷ | 5.4×10⁷ | 6.2×10⁷ | 9.2×10⁷ | 6.8×10⁷ |
| Creep properties (160°C) | | | Good | Good | Good | Good | Good | Good |

| | | Component | Comparative Example 1 | Comparative Example 2 | Comparative Example 3 |
|---|---|---|---|---|---|
| Agent A | Component (A) | (a1)jER828 | 50 | 50 | 50 |
| | | (a2) RIKARESIN HBE-100 | 50 | 50 | 50 |
| | Component (B) | TC-100 | 4 | 4 | 4 |
| | Optional component | KBM-403 | 1 | 1 | 1 |
| | Total amount | | 105 | 105 | 105 |
| Agent B | Component (C) | (c1)SAX750 | 50 | 42.5 | 12.5 |
| | | (c2)SAX575 | 50 | 42.5 | 12.5 |
| | Component (D) | Ancamine K-54 | 4 | 3.5 | 1 |
| | Optional component | Z-6094 | 3.2 | 2.7 | 0.8 |
| | Total amount | | 107.2 | 91.2 | 26.8 |
| Storage modulus (-40°C)[Pa] | | | 6.3×10⁸ | 7.5×10⁸ | 23.0×10⁸ |
| Storage modulus (160°C)[Pa] | | | 6.7×10⁶ | 2.2×10⁷ | 9.6×10⁷ |
| Creep properties (160°C) | | | Poor | Poor | Good |

From the results of Examples 1 to 6 in Table 1, it was confirmed that the two-part curable resin composition of the present invention is excellent in flexibility at low temperatures and creep resistance at high temperatures. Above all, Examples 1 to 4 in which two or more components (A) and two or more components (C) were used in combination exhibited better results such that the storage modulus at a high temperature of 160°C was 6.5 × 10⁷ Pa or less. In contrast, since the component (C) was more than 80 parts by mass per 100 parts by mass of the component (A) in Comparative Examples 1 and 2, it was confirmed that the storage modulus at a high temperature of 160°C was low and creep resistance was poor. In addition, since the component (C) was less than 27 parts by mass per 100 parts by mass of the component (A) in Comparative Example 3, it was confirmed that the storage modulus at a low temperature was high and flexibility was poor.

### Industrial Applicability

The two-part curable resin composition of the present invention can maintain flexibility at low temperatures and is excellent in creep resistance at high temperatures, and is thus suitably used for various applications such as an adhesive, an encapsulant, a sealant, a potting agent, a coating agent, a conductive paste, a heat dissipation agent, and a fire retardant. Therefore, the two-part curable resin composition of the present invention is applicable to a wide field and is industrially useful.

The present application claims priority based on Japanese Patent Application No. 2023-193440 filed on November 14, 2023, which is incorporated herein by reference in its entirety.

## Claims

1. A two-part curable resin composition comprising the following components (A) to (D):
component (A): an epoxy resin,
component (B): a metal catalyst,
component (C): an organic polymer having a hydrolyzable silyl group, and
component (D): a curing agent for an epoxy resin,
wherein the component (C) is present in an amount of 27 to 80 parts by mass per 100 parts by mass of the component (A).

2. The two-part curable resin composition according to claim 1, wherein the two-part curable resin composition is composed of an agent A and an agent B, wherein the agent A is a composition containing the component (A) and the component (B), and the agent B is a composition containing the component (C) and the component (D).

3. The two-part curable resin composition according to claim 1, wherein the component (A) contains a bisphenol type epoxy resin (a1) and/or a hydrogenated bisphenol type epoxy resin (a2).

4. The two-part curable resin composition according to claim 1, wherein the component (B) is a chelated titanium catalyst.

5. The two-part curable resin composition according to claim 1, wherein the component (C) contains a dimethoxysilyl-containing organic polymer (c1) and/or a trimethoxysilyl-containing organic polymer (c2).

6. The two-part curable resin composition according to claim 1, wherein the two-part curable resin composition is used for bonding of a motor magnet.

7. A cured product obtained by curing the two-part curable resin composition according to claim 1.

8. A motor using the two-part curable resin composition according to claim 1.
